# FASCICULE DE BREVET EUROPEEN

(11) **EP 2 297 504 B1**
(45) Date de publication et mention de la délivrance du brevet: **27.03.2013**
(21) Numéro de dépôt: 08871988.5
(22) Date de dépôt: 25.11.2008
(51) Int. Cl.: F16L 37/091, F16L 33/22, F16L 37/00, F16B 21/06

(54) **ENSEMBLE RACCORDE DE MANIERE SECURISEE D'UN TUBE A UNE PIECE RIGIDE ALESEE**
GESICHTERTE VERBINDUNGSANORDNUNG ZWISCHEN EINEM ROHR UND EINEM STARREN BAUTEIL MIT BOHRUNG
SECURELY CONNECTED ASSEMBLY INCLUDING A TUBE AND A BORED RIGID PART

(30) Priorité: 27.11.2007 FR 0708274
(43) Date de publication de la demande: 23.03.2011
(73) Titulaire: PARKER HANNIFIN MANUFACTURING France SAS, 74100 Ville-la-Grand (FR)
(72) Inventeur: LOTTI, Rinaldo, CH-4812 Muhlethal (CH)
(74) Mandataire: Robert, Jean-Pierre
(86) Numéro de dépôt international: PCT/FR2008/001638
(87) Numéro de publication internationale: WO 2009/095566

(56) Documents cités:
- FR-A- 2 772 458
- US-A- 6 065 779

## Description

La présente invention concerne un ensemble raccordé de manière sécurisée d'un tube à une pièce rigide alésée au moyen d'un dispositif de raccordement rapide destiné à réaliser l'ancrage d'un tube dans un alésage de la pièce rigide ainsi que l'étanchéité du raccord formé par simple enfoncement du tube dans l'alésage équipé de ce dispositif de raccordement.

### ARRIERE PLAN DE L'INVENTION

On connaît des dispositifs de raccordement rapide du type à cartouche destiné à réaliser la connexion étanche d'un tube dans un alésage d'une pièce rigide, se présentant sous la forme d'un insert tubulaire possédant des moyens extérieurs pour son ancrage permanent dans la pièce rigide et des moyens intérieurs pour la retenue du tube.

Ces moyens de retenue du tube sont souvent réalisés sous la forme d'une rondelle à denture intérieure dont les dents sont soulevées par flexion lors de l'introduction du tube et tendent à mordre le tube pour s'opposer à son extraction. Lorsque l'on souhaite autoriser la déconnexion ultérieure du tube, on dispose entre le tube et le corps de l'insert un poussoir de débrayage coulissant qui permet de soulever les dents pour libérer le tube.

Toutefois, on constate en pratique qu'un enfoncement accidentel du poussoir peut provoquer de façon intempestive la déconnexion du tube. Une telle déconnexion accidentelle peut avoir des conséquences graves dans la mesure où elle conduit non seulement à l'apparition de fuites importantes qui peuvent être source de pollution de l'environnement du raccord mais également à la mise hors service du composant alimenté par l'intermédiaire du raccord.

Il existe de nombreuses solutions concurrentes pour former un obstacle au coulissement du poussoir de débrayage. On citera celles qui sont constituées par une bague intercalée, dès la fabrication des organes de raccordement, derrière la tête du poussoir, entre celle-ci et une surface fixe du raccord ou de l'organe qu'il équipe, cette bague pouvant, comme dans le document FR 2.772.458 être brisée au moyen d'un outil pour redonner au poussoir sa fonction de débrayage de la retenue.

En plus de prévenir une connexion accidentelle, les moyens de sécurité qui forment obstacle au coulissement du poussoir doivent également constituer le témoin de l'intégrité de la connexion. Les organes connus de verrouillage ayant cette fonction de témoin sont le plus souvent de structure complexe par le fait qu'il est organisé une coopération entre le verrou et le raccord, les moyens coopérants étant de petite taille donc précis à réaliser et demandant un assemblage minutieux pour ne pas augmenter inutilement l'encombrement du raccord.

Un but de la présente invention est donc dans les dispositifs de raccordement dit « rapides » de prévenir l'enfoncement accidentel ou malveillant du poussoir de débrayage de la rondelle de retenue et de constituer un témoin simple d'inviolabilité de la connexion.

### OBJET DE L'INVENTION

A cet effet, on prévoit selon l'invention un ensemble raccordé de manière sécurisée d'un tube à une pièce rigide alésée au moyen d'un dispositif de raccordement rapide comportant un insert tubulaire possédant des moyens de son ancrage dans l'alésage de la pièce rigide, des moyens intérieurs débrayables de retenue du tube, et un moyen de débrayage monté mobile en translation par rapport à la pièce rigide pour provoquer le débrayage des moyens de retenue lors de son enfoncement dans la pièce, le moyen de débrayage possédant une partie arrière qui fait saillie à l'extérieur de la pièce et qui présente une surface d'épaulement située en regard d'une surface fixe de la pièce ou de l'insert tubulaire, une gorge étant ainsi définie entre elles pour recevoir une cale intercalaire s'opposant à l'enfoncement du moyen de débrayage, dans lequel ensemble ladite cale est en forme de cavalier dont au moins une zone périphérique est reliée, au moyen d'une entretoise sécable à un élément de verrouillage, parallèle au cavalier, maintenu à distance de ce dernier par ladite entretoise d'une valeur au moins égale à la dimension de la tête du poussoir séparant la surface d'épaulement de la surface d'extrémité et placé de manière à buter contre le tube lorsque la cale est manoeuvrée pour être extraite de la gorge.

Ainsi, comme dans l'état de la technique, tout effort d'enfoncement du poussoir de débrayage conduit à mettre la surface d'épaulement du poussoir en appui contre la cale intercalaire amovible, elle-même en appui contre la surface fixe susdite. En revanche, de manière originale, la cale intercalaire est rapportée sur un raccord qui est de fabrication standard donc à bas coût, par un simple enfourchement de ce raccord, la fonction de témoin du dispositif n'existant qu'une fois la connexion d'un tube au raccord a été effectuée. En effet cette connexion impose le passage du tube dans la concavité du moyen de verrouillage qui entoure au moins partiellement l'orifice d'entrée du raccord ménagé au travers de la tête du poussoir.

L'entretoise constitue une zone de fragilité au niveau de laquelle il est facile de séparer le cavalier de cet élément. Une fois détaché de l'élément de verrouillage, le cavalier peut être extrait radialement de la gorge dans laquelle il est placé, si l'on veut redonner une possibilité de coulissement au poussoir de débrayage des dents. Ainsi, après rupture du lien entre le cavalier et l'élément de verrouillage et déconnexion, soit ce dernier, affectant la forme d'une bague, est encore présent sur le tube sur lequel il a glissé en s'éloignant du raccord, soit a disparu, constituant dans les deux cas le témoin de la déconnexion.

L'élément de verrouillage peut donc affecter, comme dit ci-dessus, la forme d'un anneau fermé (bague), soit la forme d'un anneau ouvert, en forme de C ou de U par exemple, de sorte que toute tentative d'extraire le cavalier de la gorge conduit l'une des branches de ce U ou de ce C à venir buter contre le tube et interdire l'extraction. L'élément de verrouillage peut même affecter la forme d'un L dont la base viendrait jouer le même rôle de butée. L'élément de verrouillage et le cavalier peuvent être reliés par plus d'une entretoise et le cavalier peut présenter une forme de branches telle qu'un effet d'encliquetage peut se produire entre les branches et le fond de la gorge qui permet d'assurer l'auto-maintien du cavalier en position de service, même s'il est détaché de l'élément de verrouillage.

D'autres caractéristiques et avantages de l'invention ressortiront de la description donnée ci-après, d'exemples de réalisation de l'invention.

### BREVE DESCRIPTION DES DESSINS

Il sera fait référence aux dessins annexés parmi lesquels :
- la figure 1 illustre un raccord rapide conforme à l'invention,
- la figure 2 est une vue extérieure d'une variante de réalisation de l'élément de verrouillage associé au cavalier
- la figure 3 est une vue extérieure d'une autre variante de réalisation de l'invention.

### DESCRIPTION DETAILLEE DE L'INVENTION

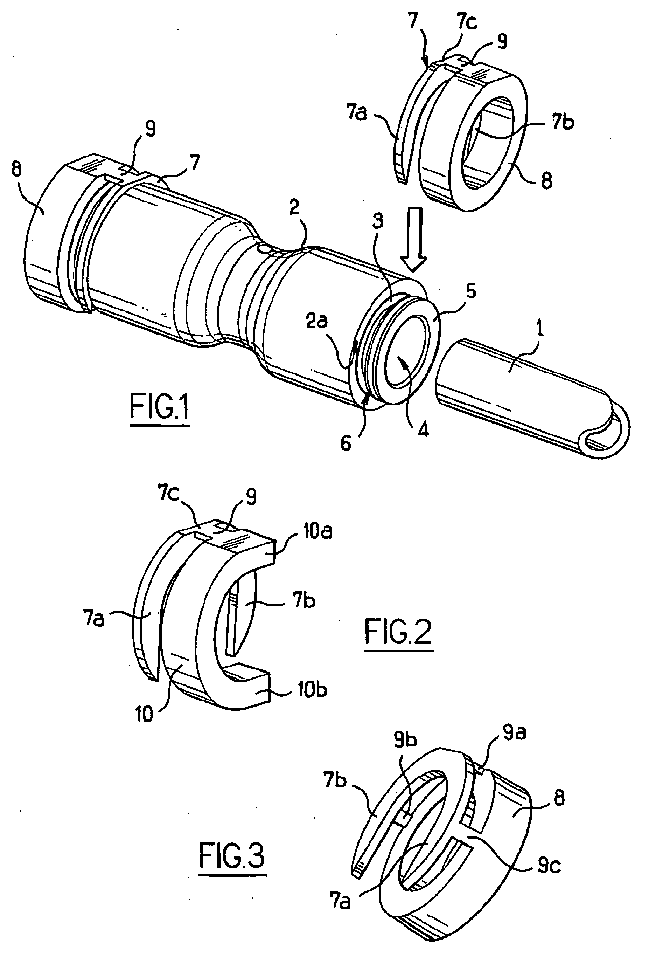

A la figure 1, on a représenté un dispositif de raccordement rapide d'un tube 1 à une pièce rigide 2 possédant un alésage dans lequel est logé un insert tubulaire 3, retenu dans cet alésage grâce à des moyens extérieurs de son ancrage dans l'alésage, cette disposition générale étant connue en elle-même.

De manière également connue, l'insert tubulaire comporte une rondelle à dents et des moyens intérieurs à l'insert 3, destinés au débrayage de la retenue du tube 1 comportent un poussoir 4 monté mobile en translation dans l'insert tubulaire 3 pour provoquer le soulèvement vers l'extérieur des dents de la rondelle, lors de son enfoncement dans l'insert tubulaire 3. Le poussoir de débrayage 4 possède une partie arrière ou tête 5 qui fait saillie à l'extérieur de l'insert tubulaire 3 ou de la pièce rigide 2 et qui présente une surface d'épaulement située en regard d'une surface fixe 2a d'extrémité de la pièce fixe 2 ou de l'insert tubulaire 3, les deux surfaces étant dans le cas de la figure, par fabrication, dans un même plan transversal. Une gorge 6 est ainsi définie entre elles.

La gorge 6 est donc l'endroit où se loge une cale intercalaire de condamnation du mouvement du poussoir.

La cale 7 représentée est en forme de cavalier comporte deux branches 7a et 7b et dont la partie 7c de liaison ou de racine des deux branches est reliée par sa périphérie, à une bague 8 annulaire, parallèle au cavalier 7 et dont le diamètre intérieur est au moins égal au diamètre extérieur du tube 1, par une entretoise sécable 9. La longueur de l'entretoise 9 est suffisante pour que la bague 8 soit distante du cavalier 7 d'une valeur au moins égale à l'épaisseur de la tête 5 du poussoir.

Avant de réaliser la connexion, l'opérateur glisse le cavalier 7 dans la gorge 6, au fond de laquelle il prend appui. Dans cette position, la bague annulaire 8 est située devant la tête 5 du poussoir et est coaxiale à l'ouverture d'introduction du tube 1 dans le raccord.

S'il faut intervenir sur la connexion et décondamner le poussoir 4, il suffit de briser l'entretoise 9 pour désolidariser le cavalier 7 de la bague 8 et de le retirer radialement. La bague 8 peut alors être coulissée le long du tube 1 pour dégager l'accès à la tête 5 du poussoir. Dans le cas où l'espace entre les branches 7a et 7b du cavalier affecte la forme d'un oméga, les branches étant légèrement élastiques ce qui est le cas de nombreuses matières plastiques, il peut donc se produire un léger encliquetage sur le fond de la gorge 6 qui pourrait servir à la remise en place, au moins temporaire du cavalier dans la gorge alors qu'il est dissocié de la bague 8.

On constate sur la figure 1 que le corps é est un raccord union droit qui est avantageusement équipé d'un verrou à son autre extrémité, formé d'un cavalier 7 et d'une bague 8.

La figure 2 illustre le cavalier 7 lié par l'entretoise 9 à un anneau ouvert en forme de C 10, d'extrémités 10a et 10b. L'extrémité inférieure 10b de ce C vient buter contre le tube 1 quand on manoeuvre le cavalier pour tenter de l'extraire de la gorge 6.

A la figure 3, le cavalier et la bague sont liés par trois entretoises 9a,9b,9c.

La bague ou le C peuvent posséder une largeur relativement important et être d'une couleur vive pour permettre le contrôle de la condamnation à distance et/ou par un système de surveillance vidéo ou plus généralement optique.

## Revendications

1. Ensemble raccordé de manière sécurisée d'un tube à une pièce rigide alésée au moyen d'un dispositif de raccordement rapide comportant un insert tubulaire (3) possédant des moyens de son ancrage dans l'alésage de la pièce rigide, des moyens intérieurs débrayables de retenue du tube (1), et un moyen de débrayage (4) monté mobile en translation par rapport à la pièce rigide (2) pour provoquer le débrayage des moyens de retenue lors de son enfoncement dans la pièce (2), le moyen de débrayage possédant une partie arrière (5) qui fait saillie à l'extérieur de la pièce (2) et qui présente une surface d'épaulement située en regard d'une surface fixe (2a) de la pièce (2) ou de l'insert tubulaire (3), une gorge (6) étant ainsi définie entre elles pour recevoir une cale (7) intercalaire s'opposant à l'enfoncement du moyen (4) de débrayage, **caractérisé en ce que** ladite cale est en forme de cavalier (7) dont au moins une zone périphérique est reliée, au moyen d'une entretoise sécable (9) à un élément de verrouillage (8,10), parallèle au cavalier (7), maintenu à distance de ce dernier par ladite entretoise (9) d'une valeur au moins égale à la dimension de la tête (5) du poussoir (4) séparant la surface d'épaulement de la surface d'extrémité (2a) et placé de manière à buter contre le tube (1) lorsque la cale (7) est manoeuvrée pour être extraite de la gorge (6).

2. Ensemble raccordé de manière sécurisée selon la revendication 1, **caractérisé en ce que** l'élément de verrouillage a la forme d'un anneau fermé (8).

3. Ensemble raccordé de manière sécurisée selon la revendication 1, **caractérisé en ce que** l'élément de verrouillage a la forme d'un anneau incomplet (10) dont l'ouverture est décalée angulairement par rapport à celle du cavalier.

4. Ensemble raccordé de manière sécurisée selon la revendication 3, **caractérisé en ce que** l'anneau incomplet possède un organe de fermeture définitive.

5. Ensemble raccordé de manière sécurisée selon l'une des revendications précédentes, **caractérisé en ce que** l'espace entre les branches (7a,7b) du cavalier (7) affecte la forme d'un oméga.

## Claims

1. A secure coupled assembly of a tube and a rigid part having a bore, the coupling being provided by means of a quick-coupling device including a tubular insert (3) possessing means for anchoring it in the bore of the rigid part, releasable internal means for retaining the tube (1), and release means (4) mounted to move in translation relative to the rigid part (2) to cause the retaining means to release when the release means are pushed into the part (2), the release means possessing a rear portion (5) that projects outside the part (2) and that presents a shoulder surface situated facing a stationary surface (2a) of the part (2) or of the tubular insert (3), a groove (6) thus being defined between them for receiving an intermediate spacer (7) that opposes the release means (4) being pushed in, the assembly being **characterized in that** said spacer is in the form of a clip (7) having at least one peripheral zone connected by means of a breakable bridge (9) to a locking element (8, 10) that extends parallel to the clip (7), that is held at a distance from the clip by said bridge (9), which distance is not less than the size of the head (5) of the pusher (4) between the shoulder surface and the end surface (2a), and that is placed in such a manner as to come into abutment against the tube (1) when action is taken on the spacer (7) to extract it from the groove (6).

2. A securely coupled assembly according to claim 1, **characterized in that** the locking element is in the form of a closed ring (8).

3. A securely coupled assembly according to claim 1, **characterized in that** the locking element is in the form of an incomplete ring (10) with its opening being angularly offset from the opening in the clip.

4. A securely coupled assembly according to claim 3, **characterized in that** the incomplete ring possesses a final closure member.

5. A securely coupled assembly according to any preceding claim, **characterized in that** the space between the branches (7a, 7b) of the clip (7) is omega-shaped.

## Patentansprüche

1. Gesicherte Verbindungsanordnung zwischen einem Rohr und einem mit einer Bohrung versehenen starren Bauteil mittels einer Schnellverbindungsvorrichtung, umfassend einen rohrförmigen Einsatz (3), der Mittel für seine Verankerung in der Bohrung des starren Bauteils und innenliegende entkuppelbare Rückhaltemittel zum Festhalten des Rohrs (1) aufweist, und eine relativ zum starren Bauteil (2) translatorisch bewegbar angeordnete Entkupplungsvorrichtung (4), um eine Entkupplung der Rückhaltemittel zu bewirken, wenn sie in das Bauteil (2) eingedrückt wird, wobei die Entkupplungsvorrichtung einen hinteren Abschnitt (5) aufweist, der über die Außenseite des Bauteils (2) hervorsteht und der eine Schulterfläche hat, die sich gegenüber einer festen Oberfläche (2a) des Bauteils (2) oder des rohrförmigen Einsatzes (3) befindet, sodass eine Nut (6) zwischen ihnen gebildet wird zum Aufnehmen eines dazwischenliegenden Keiles (7), der sich dem Eindrücken der Entkupplungsvorrichtung (4) widersetzt, **dadurch gekennzeichnet, dass** der Keil die Form eines Reiters (7) hat, von dem mindestens eine periphere Zone mittels eines durchtrennbaren Abstandselements (9) mit einem Verriegelungselement (8, 10) verbunden ist, das parallel zum Reiter (7) und im Abstand zu diesem durch das genannte Abstandselement (9) gehalten ist, wobei der Abstandswert mindestens der Abmessung des Kopfes (5) des Stößels (4) entspricht, der die Schulterfläche von der Endfläche (2a) trennt und so platziert ist, dass er an das Rohr (1) stößt, wenn der Keil (7) betätigt wird, um aus der Nut (6) herausgezogen zu werden.

2. Gesicherte Verbindungsanordnung nach Anspruch 1, **dadurch gekennzeichnet, dass** das Verriegelungselement die Form eines geschlossenen Ringes (8) hat.

3. Gesicherte Verbindungsanordnung nach Anspruch 1, **dadurch gekennzeichnet, dass** das Verriegelungselement die Form eines unvollständigen Ringes (10) hat, bei dem die Öffnung relativ zur Öffnung des Reiters winkelversetzt ist.

4. Gesicherte Verbindungsanordnung nach Anspruch 3, **dadurch gekennzeichnet, dass** der unvollständige Ring ein Organ zum endgültigen Schließen aufweist.

5. Gesicherte Verbindungsanordnung nach einem der vorhergehenden Ansprüche, **dadurch gekennzeichnet, dass** der Raum zwischen den Schenkeln (7a, 7b) des Reiters (7) die Form eines Omegas aufweist.
